# EUROPEAN PATENT APPLICATION

(11) **EP 4 851 518 A1**
(43) Date of publication of application: **09.12.2026**
(21) Application number: 24922066.6
(22) Date of filing: 29.08.2024
(51) Int. Cl.: F16L 59/147, F16L 9/10

(54) **HIGH TEMPERATURE GAS PIPE**

(30) Priority: 31.01.2024 JP 2024013030
(71) Applicant: Nippon Steel Corporation, Tokyo 100-8071 (JP)
(72) Inventor: NITTA Michio, Tokyo 100-8071 (JP)
(74) Representative: Vossius & Partner Patentanwälte Rechtsanwälte mbB
(86) International application number: PCT/JP2024/030856
(87) International publication number: WO 2025/163954

(57) **Abstract**

A high-temperature gas pipe for conveying a high-temperature gas containing water vapor makes it possible to achieve a reduction in size and weight of the pipes by using a microporous thermal insulation material while suppressing deterioration of thermal insulation performance due to a hydration reaction. The high-temperature gas pipe for conveying a high-temperature gas containing water vapor includes: at least one refractory layer forming a working surface inside the pipe; a microporous thermal insulation layer laminated on an outer side of the at least one refractory layer; and a steel shell formed on an outer side of the microporous thermal insulation layer.

## Description

### TECHNICAL FIELD

The present invention relates to a high-temperature gas pipe.

### BACKGROUND ART

Various refractory structures have been proposed for pipes for conveying high-temperature fluids. To provide an inner wall of pipes, vessels, or the like with resistance to thermal shock caused by large temperature fluctuations of an internal fluid, for example, Patent Literature 1 discloses a technique in which the inner wall subjected to thermal cycles by the internal fluid is coated with a titanium layer and a mullite layer to provide a thermal insulation structure. Patent Literature 2 discloses a tubular thermal insulation wall for preventing gaps in a radial direction of a pipe and gaps at connection portions. The tubular thermal insulation wall is provided by forming a thermal insulation structure such that a blanket-like material mainly composed of ceramic fibers is used for a low-temperature side inside the pipe and a tubular rigid molded body mainly composed of ceramic fibers is used for a high-temperature side, interposing an inorganic foamable amorphous material that expands and hardens at normal temperature between the blanket-like material and an inner wall of the pipe, and pressure-bonding the thermal insulation structure to the inner wall of the pipe.

Meanwhile, microporous thermal insulation materials are known to exhibit thermal insulation performance superior to that of typical insulation materials including calcium silicate and ceramic fibers. Specifically, a microporous thermal insulation material is formed by using, as a main raw material, a spherical hollow-structure material having a particle diameter in a range from 5 nm to 30 nm to form closed micropores having a diameter of 100 nm or less. For example, WDS (registered trademark), which is a nano insulation material using fumed silica as a raw material, is known. As other examples of the microporous thermal insulation material, aerogels such as silica aerogels and nanoporous silica described in Patent Literature 3 and Patent Literature 4 are also known. In the microporous thermal insulation material, heat transfer due to internal air convection is suppressed, thereby achieving high thermal insulation performance. Using the microporous thermal insulation material having high thermal insulation performance makes it possible to reduce the size and weight of apparatuses and equipment.

### CITATION LIST

### PATENT LITERATURE(S)

Patent Literature 1: JP H05-287553 A
Patent Literature 2: JP S59-162187 A
Patent Literature 3: JP 2022-082299 A
Patent Literature 4: International Publication No. WO 2017/038646

### SUMMARY OF THE INVENTION

### PROBLEM(S) TO BE SOLVED BY THE INVENTION

Even in the thermal insulation structures of pipes as described in Patent Literature 1 and Patent Literature 2, it is possible to reduce the size and weight of pipes by using a microporous thermal insulation material. However, in the case of a high-temperature gas pipe for conveying a high-temperature gas containing water vapor, water vapor that has permeated from an interior of the pipe through a porous refractory structure condenses into water. When the condensed water comes into contact with the microporous thermal insulation material, a hydration reaction damages a structure of closed micropores to deteriorate thermal insulation performance.

Accordingly, an object of the invention is to provide a high-temperature gas pipe for conveying a high-temperature gas containing water vapor, which makes it possible to reduce size and weight of the pipe by using a microporous thermal insulation material while suppressing deterioration of thermal insulation performance due to a hydration reaction.

### MEANS FOR SOLVING THE PROBLEM(S)

[1] A high-temperature gas pipe for conveying a high-temperature gas containing water vapor includes: at least one refractory layer forming a working surface inside the pipe; a microporous thermal insulation layer laminated on an outer side of the at least one refractory layer; and a steel shell formed on an outer side of the microporous thermal insulation layer.
[2] The high-temperature gas pipe according to [1], in which materials and thicknesses of the at least one refractory layer and the microporous thermal insulation layer are designed such that a temperature at an interface between the microporous thermal insulation layer and the steel shell is equal to or higher than a dew point temperature of the high-temperature gas.
[3] The high-temperature gas pipe according to [1], in which materials and thicknesses of the at least one refractory layer and the microporous thermal insulation layer are designed such that a temperature at an interface between the microporous thermal insulation layer and the steel shell is 100 degrees C or higher.
[4] The high-temperature gas pipe according to any one of [1] to [3], in which the at least one refractory layer includes, in order from the working surface side, a wear refractory layer, a thermal insulation brick layer, and a castable refractory layer.
[5] The high-temperature gas pipe according to any one of [1] to [3], in which the microporous thermal insulation layer is formed of WDS (registered trademark).

By arranging the microporous thermal insulation layer as the outermost thermal insulation layer in contact with the steel shell, the amount of water vapor reaching the microporous thermal insulation layer is reduced, thereby suppressing the hydration reaction to some extent. Furthermore, by designing the materials and thicknesses of the refractory layer and the microporous thermal insulation layer such that the temperature at the interface between the microporous thermal insulation layer and the steel shell is equal to or higher than the dew point temperature of the high-temperature gas, deterioration of the thermal insulation performance due to the hydration reaction in the microporous thermal insulation material can be prevented more reliably. By using the microporous thermal insulation material having excellent thermal insulation performance and further preventing deterioration of the thermal insulation performance, it is possible to reduce the size and weight of the pipe.

### BRIEF DESCRIPTION OF DRAWING(S)

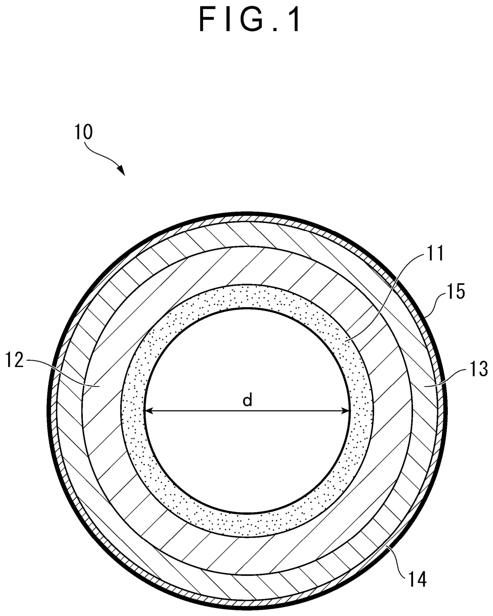

Fig. 1 is a cross-sectional view of a high-temperature gas pipe according to an exemplary embodiment of the invention.

### DESCRIPTION OF EMBODIMENT(S)

Referring to the accompanying drawing, a preferred exemplary embodiment of the invention will be described in detail below. In the specification and the drawing, components having substantially the same functional configuration are denoted by the same reference numerals, and redundant descriptions thereof are omitted.

Fig. 1 is a cross-sectional view of a high-temperature gas pipe according to an exemplary embodiment of the invention. In the illustrated example, a high-temperature gas pipe 10 has a structure in which, in order from a working surface (innermost surface) side inside the pipe, a wear refractory layer 11, a thermal insulation brick layer 12, a castable refractory layer 13, and a microporous thermal insulation layer 14 are laminated, and a steel shell 15 is formed on an outer side of the microporous thermal insulation layer 14. The wear refractory layer 11 is a refractory having excellent high-temperature strength and capable of withstanding a working-surface temperature during conveyance of the high-temperature gas. Specifically, it is preferable to use an alumina-based refractory as the wear refractory layer 11. The alumina-based refractory desirably has an alumina content of 90% or more, and, in order to inhibit intrusion of a conveyed gas, desirably has a small number of through pores and a porosity of 20% or less. The thermal insulation brick layer 12 is formed of a refractory material having thermal insulation properties to prevent heat from escaping from the working surface, while exhibiting high-temperature strength sufficient to withstand internal temperatures equivalent to those of the wear refractory. Specifically, it is preferable to use a mullite-based refractory as the thermal insulation brick layer 12. The castable refractory layer 13 is a thermal insulation layer formed of an unshaped (castable) refractory for dimensional adjustment. The castable refractory is formed by mixing refractory aggregates and a binder such as alumina cement.

The microporous thermal insulation layer 14 is a layer formed of the microporous thermal insulation material as described above. More specifically, the microporous thermal insulation material is formed of a spherical hollow-structure material as a main raw material to include closed micropores. Examples of the main raw material include fumed silica, aerogels such as silica aerogels, and nanoporous silica. The spherical hollow-structure material has a particle diameter, for example, in a range from 5 nm to 30 nm, and the closed micropores have a diameter, for example, of 100 nm or less. WDS (registered trademark), which is a nano insulation material using fumed silica as a raw material, is also an example of the microporous thermal insulation material. The raw material of the microporous thermal insulation layer 14 is not limited to silica-based raw materials; other raw materials, such as alumina-based raw materials, may also be used. Specific examples include mullite, which is a mixed-crystal material of alumina and silica. The steel shell 15 is disposed on an outer side of the microporous thermal insulation layer 14 and supports a structure of the high-temperature gas pipe 10.

In the high-temperature gas pipe 10 including the microporous thermal insulation layer 14 as described above, the microporous thermal insulation layer is superior in thermal insulation performance to the wear refractory, the thermal insulation brick, and the castable refractory forming the other layers. Accordingly, sufficient thermal insulation can be achieved with a thinner thickness, making it possible to reduce the size and weight of the pipe. Specifically, for example, when an inner diameter of the pipe is determined based on a gas flow rate, an outer diameter thereof can be further reduced. Alternatively, when the outer diameter of the pipe is determined due to spatial constraints, the inner diameter thereof can be further increased to increase the gas flow rate.

Materials such as WDS (registered trademark) that forms the microporous thermal insulation layer 14 have a maximum service temperature of less than 1,000 degrees C, and have a thermal conductivity that decreases as temperature decreases. Therefore, from a viewpoint of reducing the size and weight of the pipe by means of the microporous thermal insulation layer 14, it is preferable to dispose the microporous thermal insulation layer 14 as a layer located on the outer side of the other refractory layers and in a lower-temperature region. In the exemplary embodiment, the microporous thermal insulation layer 14 is disposed in contact with the steel shell 15 as the outermost layer among thermal insulation layers. It should be noted that the refractory layers located on an inner side of the microporous thermal insulation layer 14 are not limited to the three-layer structure including the wear refractory layer 11, the thermal insulation brick layer 12, and the castable refractory layer 13 described above, and it is sufficient that at least one refractory layer forming a working surface inside the pipe is disposed. For example, the high-temperature gas pipe may have a structure in which the castable refractory layer is omitted, and the wear refractory layer 11, the thermal insulation brick layer 12, and the microporous thermal insulation layer 14 are laminated in order from the working surface side inside the pipe, and the steel shell 15 is formed on the outer side of the microporous thermal insulation layer 14. Alternatively, the order in which the thermal insulation brick layer 12 and the castable refractory layer 13 are formed from the working surface side may be reversed. The castable refractory layer 13 has both refractory properties and thermal insulation properties, and therefore can serve as either a refractory layer or a thermal insulation layer.

From the viewpoint of reducing the size and weight of the pipe, it is preferable that the thickness of each layer is as small as possible. The thickness of each layer is not particularly limited; however, for example, the thickness of the wear refractory layer may be 120.0 mm or less and may be 10.0 mm or more. In addition, for example, the thickness of the castable refractory layer may be 150.0 mm or less and may be 130.0 mm or more. The thickness of the thermal insulation brick layer may be, for example, 200.0 mm or less and may be 50.0 mm or more. In addition, for example, an upper limit of the thickness of the microporous thermal insulation layer may be 20.0 mm or less and may be 12.5 mm or less. A lower limit of the thickness of the microporous thermal insulation layer is also not particularly limited; however, generally, 5.0 mm is a manufacturing limit.

As described above, when a high-temperature gas containing water vapor, such as coke oven gas (COG), is conveyed in the high-temperature gas pipe 10, water vapor that has permeated from inside the pipe through the porous refractory structure of the wear refractory layer 11, the thermal insulation brick layer 12, and the castable refractory layer 13 may condense into water. If this condensed water comes into contact with the microporous thermal insulation layer 14, a hydration reaction may occur. When a hydration reaction occurs, the structure of closed micropores in the microporous thermal insulation material is damaged to deteriorate thermal insulation performance. This phenomenon is not limited to cases where the raw material is silica-based; similar phenomena also occur in microporous thermal insulation materials made of other raw materials, such as alumina-based materials. By arranging the microporous thermal insulation layer 14 as the outermost thermal insulation layer in contact with the steel shell 15, the amount of water vapor reaching the microporous thermal insulation layer 14 is reduced; therefore the hydration reaction can be suppressed to some extent regardless of whether the design described below is applied.

Furthermore, in the exemplary embodiment, by setting the materials and the thicknesses of the wear refractory layer 11, the thermal insulation brick layer 12, the castable refractory layer 13, and the microporous thermal insulation layer 14 such that a temperature at an interface between the microporous thermal insulation layer 14 and the steel shell 15 is equal to or higher than a dew point temperature of a high-temperature gas, water vapor that has reached the microporous thermal insulation layer 14 is prevented from condensing. As a result, deterioration in thermal insulation performance due to a hydration reaction in the microporous thermal insulation material can be prevented more reliably. The temperature at the interface between the microporous thermal insulation layer 14 and the steel shell 15 can be calculated by heat conduction calculation based on a temperature of a gas conveyed in the high-temperature gas pipe, an ambient temperature, thicknesses of the respective layers, and thermal conductivities thereof. Alternatively, the temperature may be measured directly by arranging a thermocouple or the like. Further, the temperature may be calculated by measuring emissivity of an outer surface of the steel shell 15. The steel shell 15 has a higher thermal conductivity than the thermal insulation material such that a temperature difference between the outer surface and the inner surface is small; therefore, the temperature of the outer surface of the steel shell 15 may be regarded as the temperature at the interface between the microporous thermal insulation layer 14 and the steel shell 15. The dew point temperature of the high-temperature gas fluctuates depending on the pressure and the amount of water vapor; however, for the sake of simplicity, a condensation temperature of water vapor at atmospheric pressure, that is,100 degrees C, may be used as a reference. Since the heat-resistant temperature of a general steel shell 15 is 600 degrees C, or approximately 250 degrees C depending on the material, it is also possible to design such that the temperature at the interface between the microporous thermal insulation layer 14 and the steel shell 15 significantly exceeds 100 degrees C, for example, is 250 degrees C or higher, while remaining within a range of 600 degrees C or lower. In this case, by reducing the thicknesses of the refractory layers, the high-temperature gas pipe can be further reduced in size and weight.

Hereinafter, results of an examination using the heat conduction calculation will be described for design examples of a high-temperature gas pipe that satisfy the conditions of the exemplary embodiment of the invention described above. In the heat conduction calculation, an inner diameter d at the working surface of the high-temperature gas pipe was set to 1,000 mm, and thermal conductivities were set, in order from the working surface side, to 1.5 W/m·K for the wear refractory layer, 0.8 W/m·K for the thermal insulation brick layer, 0.5 W/m·K for the castable refractory layer, 0.03 W/m·K for the microporous thermal insulation material (WDS (registered trademark) layer, and 40 W/m·K for the steel shell. In addition, a temperature of a gas conveyed in the high-temperature gas pipe was set to 1,000 degrees C, and an ambient temperature was set to 25 degrees C. Table 1 shows examples of layer configurations of the high-temperature gas pipe and results of the heat conduction calculation for each case. The smaller the amount of heat dissipation to the outside calculated in each example, the higher the thermal insulation performance of the high-temperature gas pipe. The interface temperatures shown in Table 1 indicate temperatures, calculated using the heat conduction calculation, at the interface between the microporous thermal insulation layer and the steel shell.

**Table 1**

| | d [mm] | Thickness of wear refractory layer [mm] | Thickness of thermal insulation brick layer [mm] | Thickness of castable refractory layer [mm] | Thickness of WDS layer [mm] | Thickness of steel shell [mm] | Outer diameter of pipe [mm] | Difference in outer diameter [mm] | Gas temp. [°C] | Interface temp. [°C] | Heat dissipation amount [kcal/m·h] |
|---|---|---|---|---|---|---|---|---|---|---|---|
| Ex. 1-1 | | 114.0 | 200.0 | 145.0 | 5.0 | | 1948.0 | - | | 113.1 | 5625.5 |
| Ex. 1-2 | | 114.0 | 200.0 | 235.0 | - | | 2118.0 | 170.0 | | - | 5621.2 |
| Ex. 2-1 | | 114.0 | 200.0 | 140.0 | 10.0 | | 1948.0 | - | | 104.0 | 4876.7 |
| Ex. 2-2 | | 114.0 | 200.0 | 330.0 | - | | 2308.0 | 360.0 | | - | 4857.9 |
| Ex. 3-1 | | 114.0 | 200.0 | 137.5 | 12.5 | | 1948.0 | - | | 100.2 | 4571.9 |
| Ex. 3-2 | | 114.0 | 200.0 | 380.0 | - | | 2408.0 | 460.0 | | - | 4553.7 |
| Ex. 4 | 1000 | 114.0 | 200.0 | 135.0 | 15.0 | 10.0 | 1948.0 | - | 1000 | 96.8 | 4302.6 |
| Ex. 5 | | 114.0 | 200.0 | 130.0 | 20.0 | | 1948.0 | - | | 90.8 | 3848.2 |
| Ex. 6 | | 114.0 | 200.0 | - | 5.0 | | 1658.0 | -290.0 | | 150.3 | 7698.7 |
| Ex 7 | | 114.0 | 100.0 | - | 5.0 | | 1458.0 | -490.0 | | 179.0 | 9242.4 |
| Ex. 8 | | 114.0 | 50.0 | - | 5.0 | | 1358.0 | -590.0 | | 198.8 | 10383.3 |
| Ex. 9 | | 114.0 | 0.0 | - | 5.0 | | 1258.0 | -690.0 | | 224.3 | 11966.4 |
| Ex. 10 | | 10.0 | 0.0 | - | 5.0 | | 1050.0 | -898.0 | | 264.6 | 13654.9 |

| | | | | | | | | | | | |
|---|---|---|---|---|---|---|---|---|---|---|---|
| Layer configuration of high-temperature gas pipe | | | | | | | | | | | |

In Example 1-1 shown in Table 1, a microporous thermal insulation layer having a thickness of 5.0 mm was formed. In Example 1-2, the microporous thermal insulation layer was not formed, and the castable refractory layer was thickened so that the amount of heat dissipation (5,621.2 kcal/m·h) became substantially the same as that in Example 1-1 (5,625.5 kcal/m·h). As a result, the outer diameter of the high-temperature gas pipe increased by 170.0 mm as compared with that in Example 1-1. Similarly, in Example 2-2 in which the castable refractory layer was thickened so that the amount of heat dissipation became substantially the same as that in Example 2-1 in which the microporous thermal insulation layer having a thickness of 10.0 mm was formed, the outer diameter of the high-temperature gas pipe increased by 360.0 mm. In Example 3-2 in which the castable refractory layer was thickened so that the amount of heat dissipation became substantially the same as that in Example 3-1 in which the microporous thermal insulation layer having a thickness of 12.5 mm was formed, the outer diameter of the high-temperature gas pipe increased by 460.0 mm. As described above, the higher the requirement to improve the thermal insulation performance of the high-temperature gas pipe and reduce the amount of heat dissipation to the outside, the greater the effect of reducing the size and weight of the pipe by forming the microporous thermal insulation layer.

On the other hand, in Examples 1-1, 2-1, and 3-1, since the interface temperature between the microporous thermal insulation layer and the steel shell is 100 degrees C or higher, water vapor reaching the microporous thermal insulation layer does not condense as long as the pressure at the interface is approximately atmospheric pressure. Accordingly, in these examples, a hydration reaction of the microporous thermal insulation material can be suppressed, thereby maintaining thermal insulation performance.

On the other hand, in Examples 4 and 5, in which the microporous thermal insulation layer was further thickened, the amount of heat dissipation was further reduced and thermal insulation performance was enhanced. However, the interface temperature between the microporous thermal insulation layer and the steel shell was lower than 100 degrees C. In these examples, water vapor reaching the microporous thermal insulation layer may condense, and thermal insulation performance may deteriorate due to a hydration reaction of the microporous thermal insulation material. However, when it can be predicted, based on a pressure at the interface and an amount of water vapor contained in the gas, that a dew point temperature of the high-temperature gas is less than 100 degrees C, a design such as those of Examples 4 and 5 can still be adopted.

In Examples 6 to 10, each pipe was further reduced in size and weight by thinning the refractory layers as compared with the layer configuration of Example 1-1 described above. In Examples 6 to 10, the castable refractory layer was omitted. In Examples 7 to 10, the thermal insulation brick layer was gradually thinned. In Example 10, the wear refractory layer was also thinned. In these examples, the interface temperature between the microporous thermal insulation layer and the steel shell was significantly higher than 100 degrees C. However, as described above, when the interface temperature was 600 degrees C or lower (Examples 6 to 10), or 250 degrees C or lower (Examples 6 to 9), the interface temperature was within an allowable temperature range relative to the heat resistance temperature of the steel shell. Therefore, if the amount of heat dissipation to the outside is within an acceptable range, the designs according to these examples can be adopted. It should be noted that, in order to thin the refractory layers, it is not necessarily required to omit the castable refractory layer, and any layer may be thinned.

In the case of the high-temperature gas pipe, since a ratio of the pipe thickness to the outer diameter is relatively high, providing the microporous thermal insulation layer yields a significant downsizing effect by thinning a refractory layer while maintaining thermal insulation performance. For example, in Examples 1-2, 2-2, and 3-2 in which the microporous thermal insulation layer was not provided, the ratio of the outer diameter to the inner diameter d of the pipe exceeds 2. In contrast, in Examples 1-1, 2-1, and 3-1 in which the microporous thermal insulation layer was provided, the ratio of the outer diameter to the inner diameter d of the pipe can be reduced to 2 or less while maintaining equivalent thermal insulation performance. The ratio of the outer diameter to the inner diameter d of the pipe is 1.5 or less in Examples 7 to 10, 1.4 or less in Examples 8 to 10, and 1.1 or less in Example 10.

As demonstrated by the results above, disposing the microporous thermal insulation layer between the refractory layer forming the inner working surface and the outermost steel shell in the high-temperature gas pipe makes it possible to reduce the outer diameter of the pipe, thereby achieving both downsizing and weight reduction. Furthermore, it is demonstrated that, in the high-temperature gas pipe designed as described above, the hydration reaction of the microporous thermal insulation layer can be suppressed by maintaining the temperature at the interface between the microporous thermal insulation layer and the steel shell at or above the dew point temperature of the high-temperature gas, more specifically, for example, at 100 degrees C or higher. When the temperature of the conveyed gas is 1,000 degrees C as in the above examples, a suitable interface temperature can be achieved by setting a thickness of the microporous thermal insulation layer to 12.5 mm or less. A lower limit of the thickness of the microporous thermal insulation layer is not limited; however, generally, 5.0 mm as in Example 1-1 is a manufacturing limit.

### EXPLANATION OF CODES

10: high-temperature gas pipe, 11: wear refractory layer, 12: thermal insulation brick layer, 13: castable refractory layer, 14: microporous thermal insulation layer, 15: steel shell

## Claims

1. A high-temperature gas pipe for conveying a high-temperature gas containing water vapor, comprising:
at least one refractory layer forming a working surface inside the pipe;
a microporous thermal insulation layer laminated on an outer side of the at least one refractory layer; and
a steel shell formed on an outer side of the microporous thermal insulation layer.

2. The high-temperature gas pipe according to claim 1, wherein materials and thicknesses of the at least one refractory layer and the microporous thermal insulation layer are designed such that a temperature at an interface between the microporous thermal insulation layer and the steel shell is equal to or higher than a dew point temperature of the high-temperature gas.

3. The high-temperature gas pipe according to claim 1, wherein materials and thicknesses of the at least one refractory layer and the microporous thermal insulation layer are designed such that a temperature at an interface between the microporous thermal insulation layer and the steel shell is 100 degrees C or higher.

4. The high-temperature gas pipe according to any one of claims 1 to 3, wherein the at least one refractory layer includes, in order from the working surface side, a wear refractory layer, a thermal insulation brick layer, and a castable refractory layer.

5. The high-temperature gas pipe according to any one of claims 1 to 3, wherein the microporous thermal insulation layer is formed of WDS (registered trademark).
